# EUROPEAN PATENT APPLICATION

(11) **EP 1 947 570 A1**
(43) Date of publication of application: **23.07.2008**
(21) Application number: 06822193.6
(22) Date of filing: 25.10.2006
(51) Int. Cl.: G06F 12/00, G06F 17/30

(54) **INFORMATION SEARCH SYSTEM AND ITS METHOD**

(30) Priority: 31.10.2005 JP 2005316082
(71) Applicant: Hewlett-Packard Development Company, L.P., Houston, TX 77070 (US)
(72) Inventor: UKAI, Fumitoshi, Tokyo 168-8585 (JP)
(74) Representative: Exell, Jonathan Mark
(86) International application number: PCT/JP2006/321216
(87) International publication number: WO 2007/052506

(57) **Abstract**

An object is to efficiently retrieve data stored and managed in a plurality of devices in a distributed manner. A PC 10 issues a retrieval request with a designation of a profile name and a profile identifier to the profile retrieval unit 2. The profile retrieval unit 2 uses the profile name to perform retrieval on a profile specification management unit 5 and obtains a physical or logical profile specification. The profile retrieval unit 2 uses another profile name further contained in the obtained logical profile specification to perform retrieval on the profile specification management unit 5 to finally obtain the physical profile specification alone. The profile retrieval unit 2 uses the profile identifier to retrieve an attribute from an attribute management unit 4 indicated by management information contained in the obtained physical profile specification. The profile retrieval unit 2 uses the obtained attribute and the designated profile identifier to generate profile information and returns the generated profile information to the PC 10.

## Description

### Technical Field

The present invention relates to an information retrieval system for obtaining one or more pieces of information by retrieval and generating information, which is obtained by combining the obtained information, and to a method therefor.

### Background Art

For example, Patent Document 1 and Patent Document 2 each disclose a system used for data retrieval.
On the other hand, data is not always stored and managed in a single device. The data is also generally stored and managed in a plurality of devices in a distributed manner.
Therefore, it is desirable that the system be improved to be suitable for storing and managing data in a plurality of devices in a distributed manner and to allow the data stored and managed in a distributed manner to be efficiently retrieved.
Patent Document 1: JP 2005-353370 A
Patent Document 2: JP 2005-122246 A

### Disclosure of the Invention

### Problems to be solved by the Invention

An object of the present invention is to provide an information retrieval system which is improved to allow data to be stored and managed in a plurality of devices in a distributed manner and a method therefor.
Another object of the present invention is to provide an information retrieval system which is improved to allow the data stored and managed in the plurality of devices in a distributed manner as described above to be efficiently retrieved and a method therefor.

### Means for solving the Problems

In the scope of the claims and this section, the correspondence between a component of the present invention (such as "first identifier") and a component described in an embodiment (such as "attribute name") is described as "first identifier (attribute name)". The description of such a correspondence is made to show the correspondence between the components for easy understanding of the present invention, and is not intended to limit the technical scope of the invention of this application.

In order to achieve the above-mentioned objects, the present invention provides an information retrieval system for retrieving and managing second information (profile information), the second information (profile information) containing first information (attribute) identified by a first identifier (attribute name) and being identified by a second identifier (profile identifier), the information retrieval system including first to third nodes (an attribute management unit 4, a profile specification management unit 5, and a profile retrieval unit 2) for communicating information with each other, in which: the first node (attribute management unit 4) stores the first information (attribute) associated with the second identifier (profile identifier); the second node (profile specification management unit 5) stores third information (profile specification) ; the third information (profile specification) contains information for associating the first information (attribute) stored in the first node (attribute management unit 4) and the second information (profile information) with each other based on a third identifier (profile name); and the third node (profile retrieval unit 2) includes: information retrieval means for, in response to a designation of the third identifier (profile name) and the second identifier (profile identifier), retrieving the second information (profile information) corresponding to the designated third identifier (profile name) from the second node (profile specification management unit 5) ; and information generation means for generating a set of pieces of the first information (attributes), each corresponding to the second identifier (profile identifier) designated by the first node (attribute management unit 4), as the second information (profile information) based on the second information (profile information) obtained as a result of the retrieval.

Preferably, the third information (profile specification) stored in the second node (profile specification management unit 5) stores fourth information (physical profile specification) and fifth information (logical profile specification) or any of the fourth information and the fifth information, the fourth information (physical profile specification) associates the third identifier (profile name), the first identifier (attribute name), and sixth information (management information) indicating the first node storing the first information (attribute) indicated by the first identifier (attribute name) with each other, and the fifth information (logical profile specification) associates the third identifier (profile name), a further third identifier (profile name) corresponding to the third identifier (profile name), the first identifier (attribute name), and a further third identifier (profile name) corresponding to the third identifier (profile name) with each other.

Preferably, the inf ormation retrieval means of the third node (profile retrieval unit 2) includes: first retrieval means for, in response to a designation of the third identifier (profile name) and the second identifier (profile identifier), performing first retrieval to obtain all pieces of the fourth information (physical profile specifications) and the fifth information (logical profile specifications), each containing the designated fourth identifier, or any of the fourth information and the fifth information from the second node (profile specification management unit 5); second retrieval means for performing second retrieval for retrieving the third information (physical profile specification) and the fifth information (logical profile specification), each containing the third identifier (profile name) contained in the fifth information (logical profile specification) obtained by the first retrieval or the second retrieval, or any of the third information and the fifth information and for repeating the second retrieval until the third information (physical profile specification) alone is obtained; and third retrieval means for performing third retrieval using the designated second identifier (profile identifier) on the first node (attribute management unit 4) indicatedby sixth information (management information) contained in the fourth information (physical profile specification) obtained by the first retrieval and the second retrieval or any of the first retrieval and the second retrieval, and the information generation means generates a set of pieces of the first information (attributes), each being obtained by the third retrieval and associated with the second identifier (profile identifier), as the second information (profile information).

Preferably, at least arbitrary two of the first to third nodes are integrally configured.

Preferably, the fourth information (physical profile specification) further contains identifier generation method information indicating a method of generating the second identifier (profile identifier), and the second node (profile specification management unit 5) further includes: identifier generation means for generating the second identifier (profile identifier) based on the identifier generation method information contained in the fourth information (physical profile specification); and registration means for performing a registration for associating the generated second identifier (profile identifier) and the first information (attribute) corresponding to the second identifier (profile identifier) with each other in the first node (attribute management unit 4).

Preferably, the fifth information (logical profile specification) further contains access method definition information for defining an access method to the fourth information (physical profile specification) and the fifth information (logical profile specification) or any of the fourth information and the fifth information, and the first retrieval means and the second retrieval means perform retrieval according to the access method definition information contained in the fifth information (logical profile specification) to obtain the fourth information (physical profile specification) and the fifth information (logical profile specification) or any of the fourth information and the fifth information.

Further, the present invention relates to an information retrieval unit (profile retrieval unit 2) for generating second information (profile information), the second information (profile information) containing first information (attribute) identified by a first identifier (attribute name) and being identified by a second identifier (profile identifier), in which: the first information (attribute) is associated with the second identifier (profile identifier) to be stored at each location; third information (profile specification) is stored; the third information (profile specification) contains information for associating the first information (attribute) stored in the first node (attribute management unit 4) and the second information (profile information) with each other based on third identifier (profile name); and the information retrieval unit (profile retrieval unit 2) includes: information retrieval means for, in response to a designation of the third identifier (profile name) and the second identifier (profile identifier), retrieving the second information (profile information) corresponding to the designated third identifier (profile name) from the second node (profile specification management unit 5) ; and information generation means for generating a set of pieces of the first information (attributes), each corresponding to the second identifier (profile identifier) designated by the first node (attribute management unit 4), as the second information (profile information) based on the second information (profile information) obtained as a result of the retrieval.

Preferably, the stored third information (profile specification) stores fourth information (physical profile specification) and fifth information (logical profile specification) or any of the fourth information and the fifth information, the fourth information (physical profile specification) associates the third identifier (profile name), the first identifier (attribute name), and sixth information (management information) indicating the first node for storing the first information (attribute) indicated by the first identifier (attribute name) with each other, and the fifth information (logical profile specification) associates the third identifier (profile name), a further third identifier (profile name) corresponding to the third identifier (profile name), the first identifier (attribute name), and a further identifier (profile name) corresponding to the third identifier (profile name) with each other.

Preferably, the information retrieval means includes: first retrieval means for, in response to a designation of the third identifier (profile name) and the second identifier (profile identifier), performing first retrieval to obtain all pieces of the fourth information (physical profile specifications) and the fifth information (logical profile specifications), each containing the designated third identifier, or any of the fourth information and the fifth information from the second node (profile specification management unit 5); second retrieval means for performing second retrieval for retrieving the fourth information (physical profile specification) and the fifth information (logical profile specification), each containing the third identifier (profile name) contained in the fifth information (logical profile specification) obtained by the first retrieval or the second retrieval, or any of the fourth information and the fifth information and for repeating the second retrieval until the third information (physical profile specification) alone is obtained; and third retrieval means for performing third retrieval using the designated second identifier (profile identifier) on the first node (attribute management unit 4) indicated by sixth information (management information) contained in the fourth information (physical profile specification) obtained by the first retrieval and the second retrieval or any of the first retrieval and the second retrieval; and the information generation means generates a set of pieces of the first information (attributes), each being obtained by the third retrieval and associated with the second identifier (profile identifier), as the second information (profile information).

Preferably, the fifth information (logical profile specification) further contains access method definition information for defining an access method to the fourth information (physical profile specification) and the fifth information (logical profile specification) or any of the fourth information and the fifth information; and the first retrieval means and the second retrieval means perform retrieval according to the access method definition information contained in the fifth information to obtain the fourth information (physical profile specification) and the fifth information (logical profile specification) or any of the fourth information and the fifth information.

Further, the present invention relates to an information retrieval method for generating second information (profile information) containing first information (attribute) identified by a first identifier (attribute name) and being identified by a second identifier (profile identifier), the first information (attribute) being associated with the second identifier (profile identifier) to be stored at each location, third information (profile specification) being stored, the third information (profile specification) containing information for associating the first information (attribute) stored in the first node (attribute management unit 4) and the second information (profile information) with each other based on third identifier (profile name). The information retrieval method includes: an information retrieval step of, in response to a designation of the third identifier (profile name) and the second identifier (profile identifier), retrieving the second information (profile information) corresponding to the designated third identifier (profile name) from a second node (profile specification management unit 5); and an information generation step of generating a set of pieces of the first information (attributes), each corresponding to the second identifier (profile identifier) designated by the first node (attribute management unit 4), as the second information (profile information) based on the second information (profile information) obtained as a result of the retrieval.

Further, the present invention relates to an information retrieval program for generating second information (profile information) containing first information (attribute) identified by a first identifier (attribute name) and being identified by a second identifier (profile identifier), the first information (attribute) being associated with the second identifier (profile identifier) to be stored at each location; third information (profile specification) being stored, the third information (profile specification) containing information for associating the first information (attribute) stored in a first node (attribute management unit 4) and the second information (profile information) with each other based on a third identifier (profile name) . The information retrieval program causes a computer to execute: an information retrieval step of, in response to a designation of the third identifier (profile name) and the second identifier (profile identifier), retrieving the second information (profile information) corresponding to the designated third identifier (profile name) from a second node (profile specification management unit 5); and an information generation step of generating a set of pieces of the first information (attributes), each corresponding to the second identifier (profile identifier) designated by the first node (attribute management unit 4), as the second information (profile information) based on the second information (profile information) obtained as a result of the retrieval.

### Effects of the Invention

The information retrieval system and the method therefor according to the present invention are improved so that the data can be stored and managed in the plurality of devices in a distributed manner.
Moreover, the information retrieval system and the method therefor are improved so as to allow the data stored and managed in the plurality of devices in a distributed manner to be efficiently retrieved.

### Brief Description of the Drawings

[Fig. 1] Aview illustrating a configuration of a network system to which an information generation method according to the present invention is applied.
[Fig. 2] A view illustrating a hardware configuration of a profile retrieval unit, an attribute management unit, and a profile specification management unit illustrated in Fig. 1.
[Fig. 3] A view illustrating profile information generated by retrieval processing performed by the profile retrieval unit illustrated in Fig. 1 using a profile name management unit, the attribute management unit, and the profile specification management unit in response to a request from a PC.
[Fig. 4] Aview illustrating a physical profile specification stored and managed in the profile specification management unit illustrated in Fig. 1.
[Fig. 5] A view illustrating the relation between management information contained in the physical profile specification illustrated in Fig. 4 and an attribute.
[Fig. 6] A view illustrating a logical profile specification stored and managed in the profile specification management unit illustrated in Fig. 1.
[Fig. 7] A first view illustrating a referred profile name contained in the logical profile illustrated in Fig. 6 and another logical profile or a physical profile.
[Fig. 8] First and second views illustrating the referred profile name contained in the logical profile illustrated in Fig. 6 and another logical profile or the physical profile.
[Fig. 9] A view illustrating a structure of a profile retrieval program operating on the profile retrieval unit illustrated in Fig. 1.
[Fig. 10] A view illustrating a structure of a profile specification management program operating on the profilespecification management unit illustrated in Fig. 1.
[Fig. 11] A view illustrating attributes stored in the attribute management unit illustrated in Fig. 1.
[Fig. 12] A view illustrating a structure of an attribute management program operating on the attribute management unit illustrated in Fig. 1.
[Fig. 13] A first communication sequence diagram illustrating an overall operation of a network system illustrated in Fig. 1 and the like, which illustrates registration processing (S10) of a profile identifier from the profile specification management unit into the attribute management unit.
[Fig. 14] A second communication sequence diagram illustrating the overall operation of the network system illustrated in Fig. 1 and the like, which illustrates retrieval processing (S12) for causing the profile retrieval unit to obtain the physical profile from the profile specification management unit.
[Fig 15] A third communication sequence diagram illustrating the overall operation of the network system illustrated in Fig. 1 and the like, which illustrates retrieval processing (S14) for causing the profile retrieval unit 2 to obtain the logical profile from the profile specification management unit for the first time.

### Best Mode for carrying out the Invention

### [Network system 1]

Hereinafter, an embodiment of the present invention will be described.

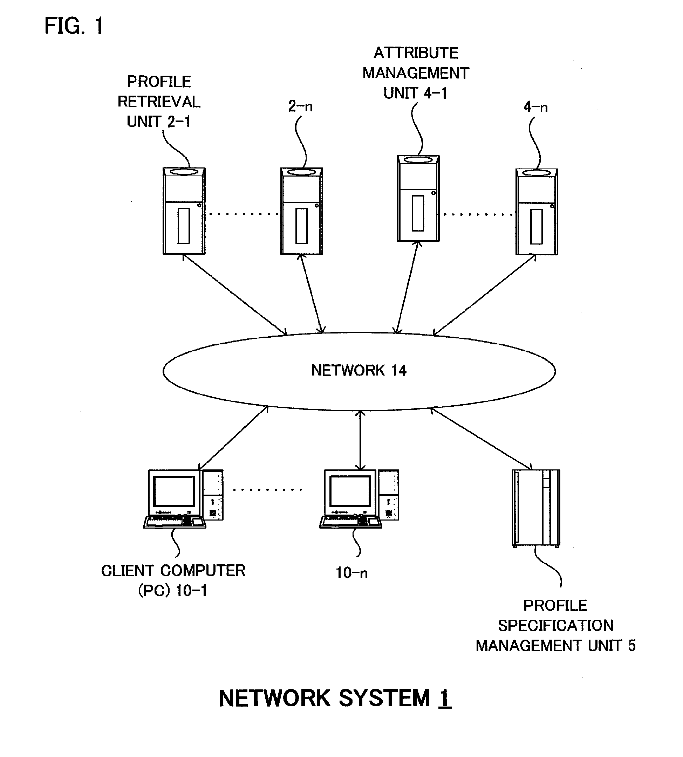

Fig. 1 illustrates a configuration of a network system 1 to which an information retrieval method according to the present invention is applied.
As illustrated in Fig. 1, the network system 1 is comprised of n profile retrieval units 2-1 to 2-n, n attribute management units 4-1 to 4-n, one profile specification management unit 5, and n client computers (PCs) 10-1 to 10-n, which are connected to each other through a network 14 such as a LAN, a WAN or the Internet to be able to communicate information with each other.
With the above configuration, the network system 1 efficiently distributes, stores and manages attributes (information) in the attribute management units 4-1 to 4-n.
Moreover, with the above configuration, the network system 1 efficiently retrieves and combines the attributes (information) which are stored and managed in a distributed manner to deliver the attributes in a form desired by a user.

Herein, n simply indicates an integer equal to or larger than 1, and all n's are not always the same number.
Hereinafter, when any of the profile retrieval units 2-1 to 2-n which can be set up in the plural is indicated without being specified, it is simply referred to as a profile retrieval unit 2 in some cases.
Moreover, a device which can have the central role in information processing and communication in the network system 1, such as the profile retrieval unit 2, is sometimes collectively referred to as a node.
The configuration of the network system 1 is merely exemplary. For example, two or more of the profile retrieval unit 2, the attribute management unit 4, and the profile specification management unit 5 can be arbitrarily integrated into a single unit.
In each of the drawings below, substantially the same component or processing is denoted in principle by the same reference numeral.

### [Hardware]

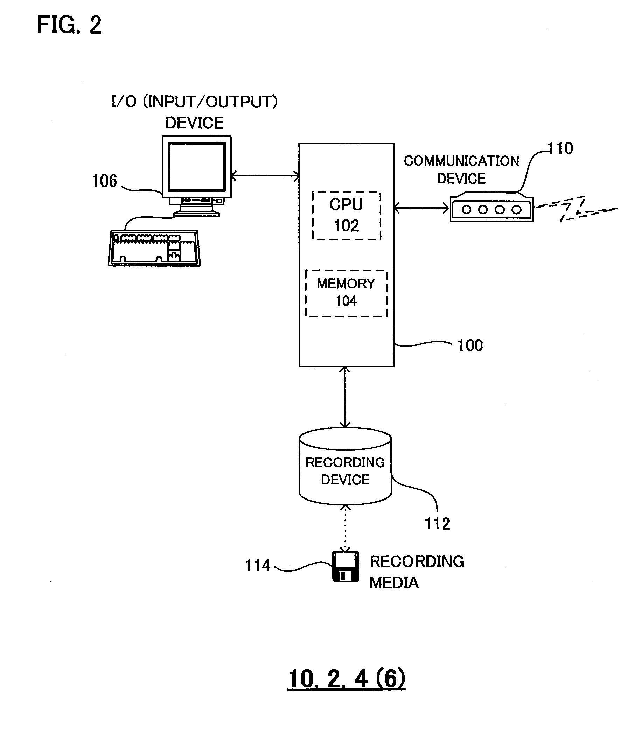

Fig. 2 is a view illustrating a hardware configuration of the profile retrieval unit 2, the attribute management unit 4, and the profile specification management unit 5 illustrated in Fig. 1.
As illustrated in Fig. 2, each of these nodes is comprised of a main body 100 including a CPU 102, a memory 104, and the like, an I/O device 106 equipped with a display device, a keyboard, a mouse, and the like, a communication device 110 for communicating with another node over the network 14, and a recording device 112 for writing/reading information to/from a recording medium 114 such as a CD device, an FD device and an HDD device.
Specifically, each of the nodes in the network system 1 has components as a computer which can perform information processing and communicate with another node.

### [Information handled in the network system 1]

First, information handled in the network system 1 will be described.

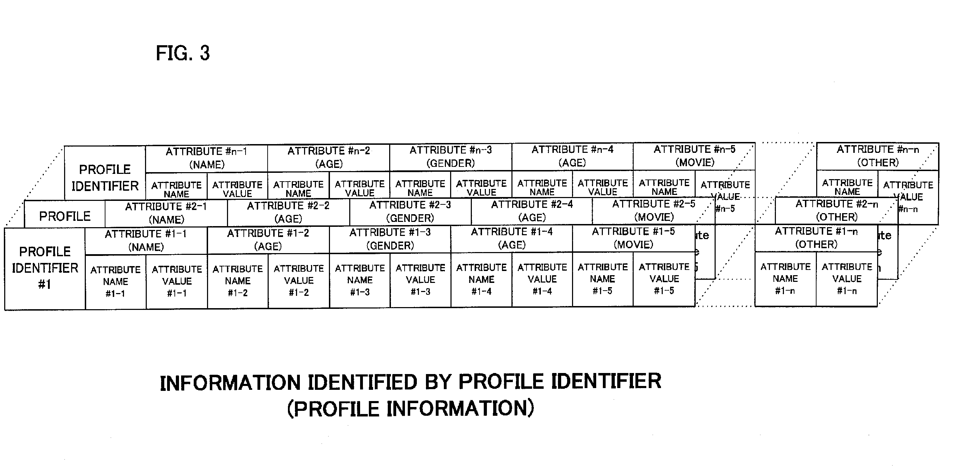

Fig. 3 is a view illustrating profile information (information identified by a profile identifier) generated by the profile retrieval unit 2 illustrated in Fig. 1, which performs retrieval processing using the attribute management unit 4 and the profile specification management unit 5 in response to a request from a PC 10.
As illustrated in Fig. 3, each piece of profile information is identified by the profile identifier and contains one or more attributes.
Fig. 3 exemplifies the case where the profile information contains an attribute indicating a "movie" preferred by a person, an attribute indicating "other" additional information and the like.
Each attribute contains an attribute name indicating a "name", an "age", a "gender" and the like of the person and an attribute value.

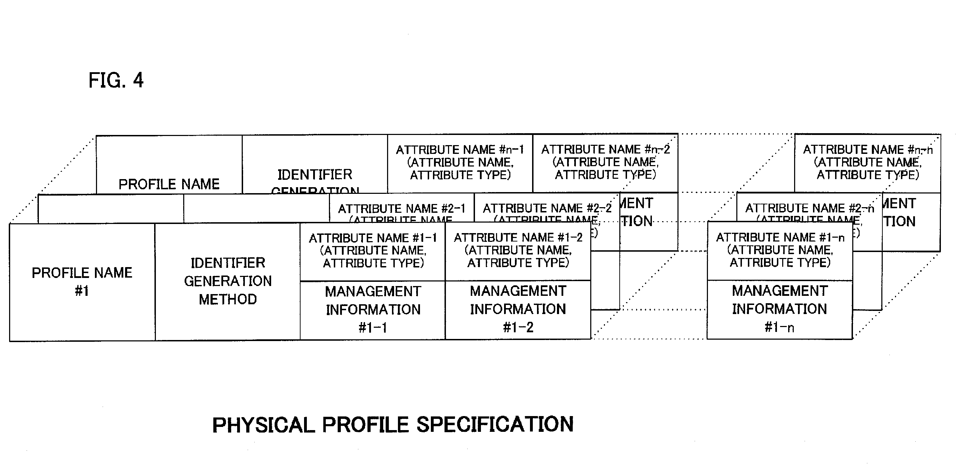

Fig. 4 is a view illustrating a physical profile specification stored and managed in the profile specification management unit 5 illustrated in Fig. 1.

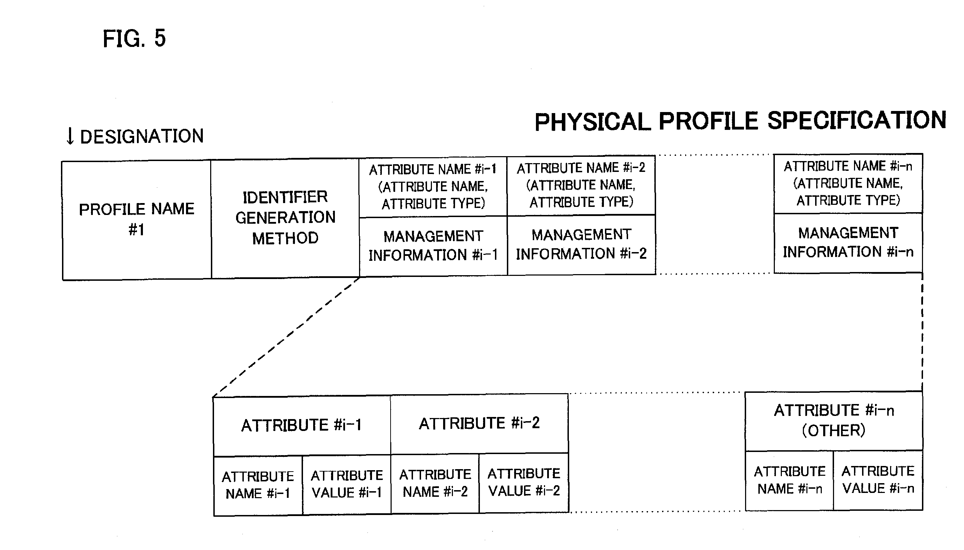

Fig. 5 is a view illustrating the relation between management information contained in the physical profile specification illustrated in Fig. 4 and the attribute.

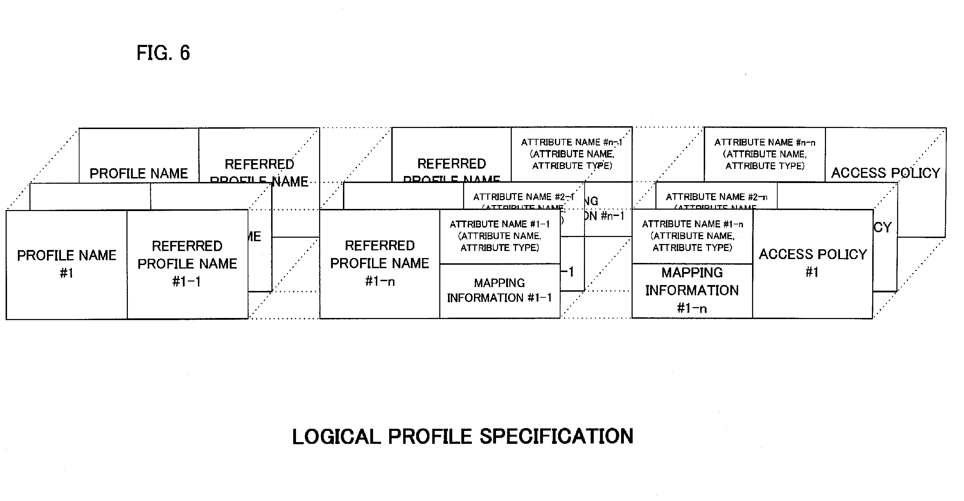

Fig. 6 is a view illustrating a logical profile specification stored and managed in the profile specification management unit 5 illustrated in Fig. 1.

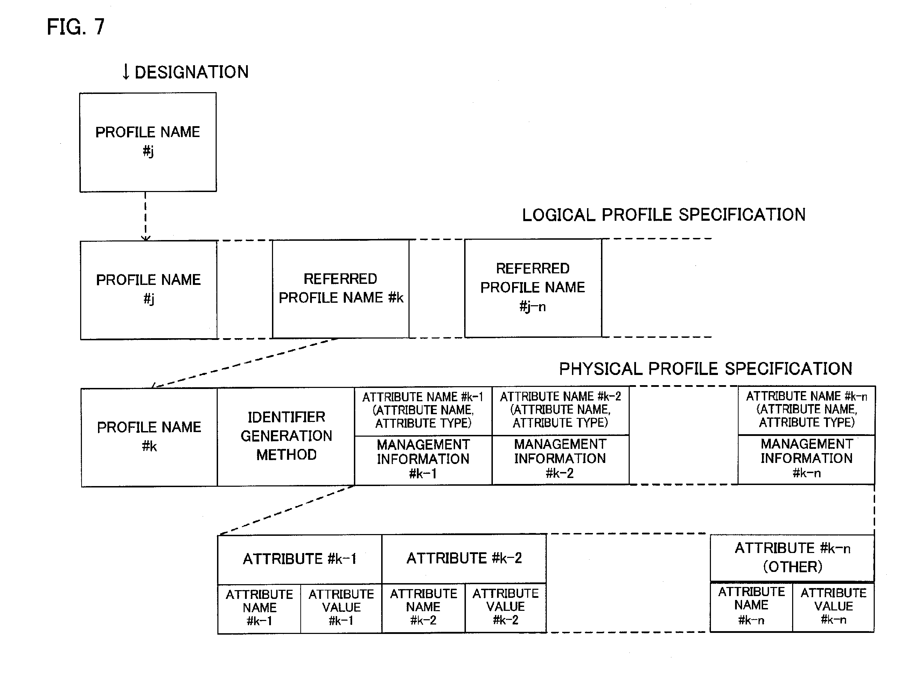

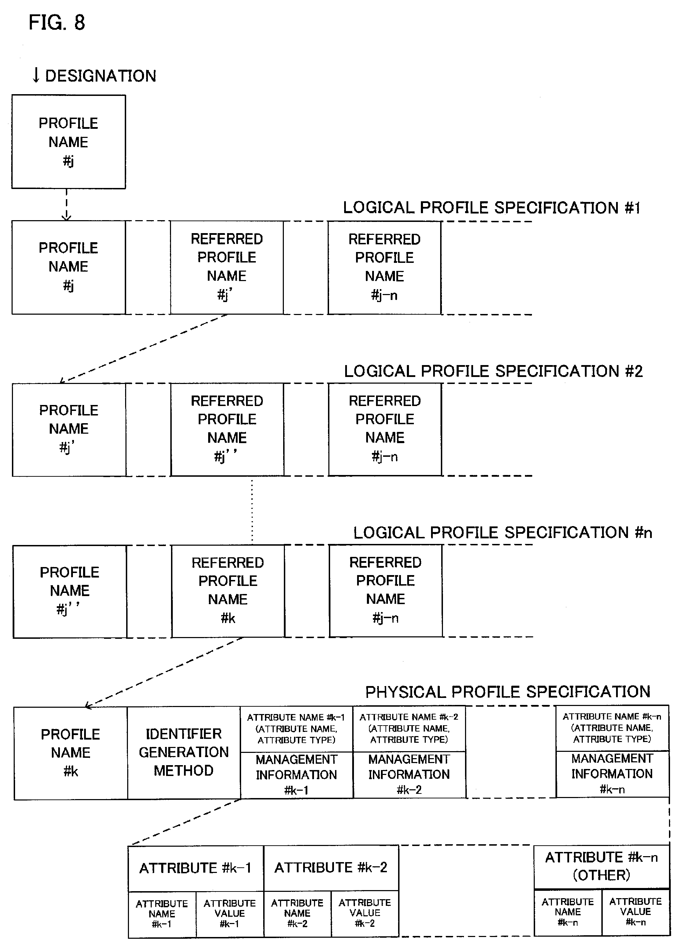

Figs. 7 and 8 are first and second views, each illustrating the relation between a referred profile name contained in the logical profile illustrated in Fig. 6 and another logical profile or a physical profile.
As illustrated in Fig. 4, each physical profile specification contains a profile name, an identifier generation method, and one or more sets of an attribute name (attribute name and attribute type) and management information which are associated with each other.
In the physical profile specification, the profile name is used not only to identify the physical profile specification but also to indicate the association between the physical profile specification and the logical profile specification through the referredprofile name contained in the logical profile specification (Fig. 6).
The attribute name and the management information associated with each other indicate which location in which attribute management unit 4 the attribute indicated by the attribute name is stored and managed (attribute storage location).

Specifically, asillustratedinFig. 5, when the physical profile specification is acquired, the profile retrieval unit 2 retrieves the attribute indicated by the attribute name contained in the physical profile specification by using the management information from the attribute management unit 4.
The identifier generation method indicates a method used for generating an identifier unique to each attribute to provide each attribute with a unique identifier when the profile specification management unit 5 registers the attribute in the attribute management unit 4.
As illustrated in Fig. 6, each logical profile specification contains a profile name, one or more referred profile names, an attribute name (attribute name and attribute type) and mapping information associated with each other, and an access policy.
In the logical profile specification, the profile name is used to identify the logical profile specification.
The referred profile name indicates a profile name of the physical profile specification (Fig. 4) containing the storage location of the attribute contained in the logical profile specification or a profile name of another logical profile specification containing the attribute contained in the logical profile specification.
Each piece of mapping information associated with the attribute name indicates the correspondence relation between the attribute name, and the referred profile name and the attribute name in the referred profile.

Specifically, as illustrated in Fig. 7, for retrieving the attribute having the attribute name contained in the logical profile specification, if the referred profile name associated with the attribute name through the mapping information is the physical profile specification, retrieval using the profile identifier or the like is performed on the attribute management unit 4 indicated by the management information contained in the physical profile specification. As a result, a target attribute is obtained.
Alternatively, as illustrated in Fig. 8, the logical profile specifications (logical locations) containing the referred profile name associated with the attribute name as the profile name can be sequentially traced through the mapping information. If the physical profile specification can be finally obtained, the physical location contained in the finally obtained physical profile specification is used to obtain a target attribute from the attribute management unit 4.

### [Software]

Hereinafter, software operating on each of the nodes in the network system 1 will be described.

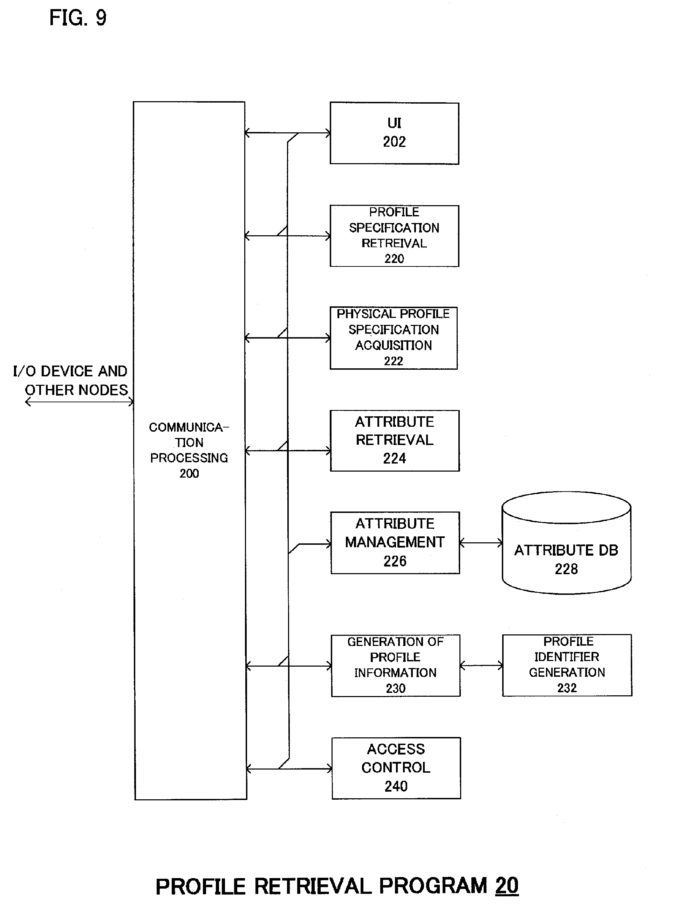

Fig. 9 is a view illustrating a structure of a profile retrieval program 20 operating on the profile retrieval unit 2 illustrated in Fig. 1.
As illustrated in Fig. 9, the profile retrieval program 20 is comprised of a communication processing section 200, a user interface section (UI section) 202, a profile specification retrieval section 220, a physical profile specification acquisition section 222, an attribute retrieval section 224, an attribute management section 226, an attribute DB 228, a profile information generation section 230, a profile identifier generation section 232, and an access control section 240.

The profile retrieval program 20 is, for example, provided to the profile retrieval unit 2 through the recording medium 114 (Fig. 2) and loaded into the memory 104 to be executed on an OS (not shown) installed on the profile retrieval unit 2 by using a hardware resource of the profile retrieval unit 2 in a concrete manner (each of the following programs is executed in the same manner) .
With the above-described components, the profile retrieval program 20 receives a designation of a structure of the profile information (specifically, the profile identifier and the profile name; Fig. 3) known to a retriever who performs retrieval using the PC 10, and performs retrieval on the attribute management unit 4 and the profile specification management unit 5.
Furthermore, the profile retrieval program 20 assembles the attributes obtained as a result of the retrieval according to the designated structure to generate the profile information illustrated in Fig. 3, and returns the generated profile information to the PC 10.

In the profile retrieval program 20, the communication processing section 200 performs processing required for the communication with another node.
The UI section 202 provides a user interface function for assisting the retrieval operation by the user of the PC 10.
The profile specification retrieval section 220 obtains the physical profile specification or the logical profile specification identified by the provided profile name (the profile name is a name for uniquely identifying the profile specification).
When the profile specification retrieval section 220 obtains the logical profile specification as a result of the retrieval performed on the profile specification management unit 5, the profile specification retrieval section 220 outputs the obtained logical profile specification to the physical profile specification acquisition section 222.
The profile specification retrieval section 220 outputs the physical profile specification obtained as a result of the retrieval performed on the profile specification management unit 5 to the attribute retrieval section 224.

As illustrated in Figs. 7 and 8, the physical profile specification acquisition section 222 performs the retrieval on the profile specification management unit 5 to sequentially trace the referred profile names contained in the logical profile specifications to finally obtain the physical profile specification.
The physical profile specification acquisition section 222 outputs the obtained physical profile specification to the attribute retrieval section 224.

By using the designated profile identifier, the attribute retrieval section 224 performs the retrieval on the attribute management unit 4 indicated by the management information contained in the physical profile specifications input from the profile specification retrieval section 220 and the physical profile specification acquisition section 222, and obtains all the attributes which are to be contained in the profile information and to be returned to the PC 10. The attribute retrieval section 224 outputs all the obtained attributes to the attribute management section 226.
The attribute management section 226 stores and manages the input attributes in the attribute DB 228.
The attribute management section 226 also provides the attributes stored in the attribute DB 228 for processing performed in the other components.
The profile information generation section 230 generates the profile information (Fig. 3) based on the attributes stored in the attribute DB 228 and the profile identifier according to the structure of the profile information, and returns the profile information to the PC 10 which made the request of the retrieval.
The access control section 240 controls access according to the access policy contained in the logical profile specification.

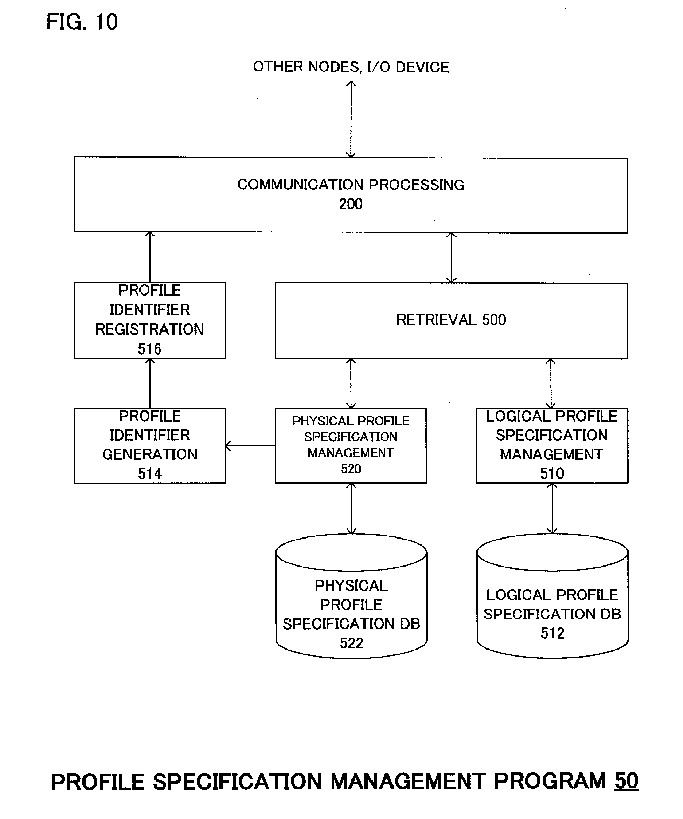

Fig. 10 is a view illustrating a structure of a profile specification management program 50 operating on the profile specification management unit 5 illustrated in Fig. 1.
AsillustratedinFig. 10, the profile specification management program 50 is comprised of the communication processing section 200, a retrieval section 500, a logical profile specification management section 510, a logical profile specification DB 512, a physical profile specification management section 520, a physical profile specification DB 522, a profile identifier generation section 514, and a profile identifier registration section 516.
With the above-described components, the profile specification management program 50 stores the logical profile specification and the physical profile specification illustrated in Figs. 4 and 6 and the like, and returns the attribute indicated by the profile name used for the retrieval or the like to the profile retrieval unit 2 according to the retrieval using the profile name (Figs. 3, 4 and 6) or the referredprofile name by the profile retrieval unit 2.

In the profile specification management program 50, the logical profile specification management section 510 stores and manages the logical profile specifications in the logical profile specification DB 512.
The logical profile specification management section 510 also provides the logical profile specifications stored in the logical profile specification DB 512 for the retrieval by the retrieval section 500.
The physical profile specification management section 520 stores and manages the physical profile specifications in the physical profile specification DB 522.
The physical profile specification management section 520 also provides the physical profile specifications stored in the physical profile specification DB 522 for the retrieval by the retrieval section 500.

The access policy contained in the logical profile specification is a policy for access to each attribute.
As described above referring to Fig. 9, when the profile information is generated, it is determined according to the access policy whether or not a retrieval requester can access the profile information and is allowed to access a certain attribute value.
The retrieval section 500 uses the profile name received from the profile retrieval unit 2 to retrieve the logical profile specification stored in the logical profile specification DB 512 and the physical profile specification stored in the physical profile specification DB 522, and returns the result of the retrieval to the profile retrieval unit 2.

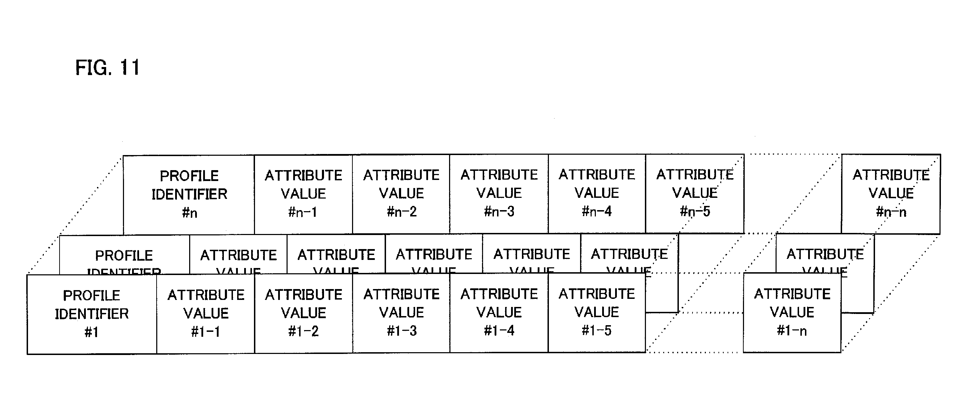

Fig. 11 is a view illustrating the attributes stored in the attribute management unit 4 illustrated in Fig. 1.
The profile identifier generation section 514 generates the profile identifier (Fig. 3) according to the identifier generation method contained in the physical profile specification (Fig. 4).
The profile identifier registration section 516 registers the generated profile identifier (Fig. 3) in the attribute management unit 4 to associate the registered profile identifier and the attribute with each other.
This processing of the profile identifier registration section 516 allows the profile identifier contained in the profile information (Fig. 3) and the attribute value of the attribute corresponding to the profile identifier to be stored in association with each other in the attribute management unit 4.

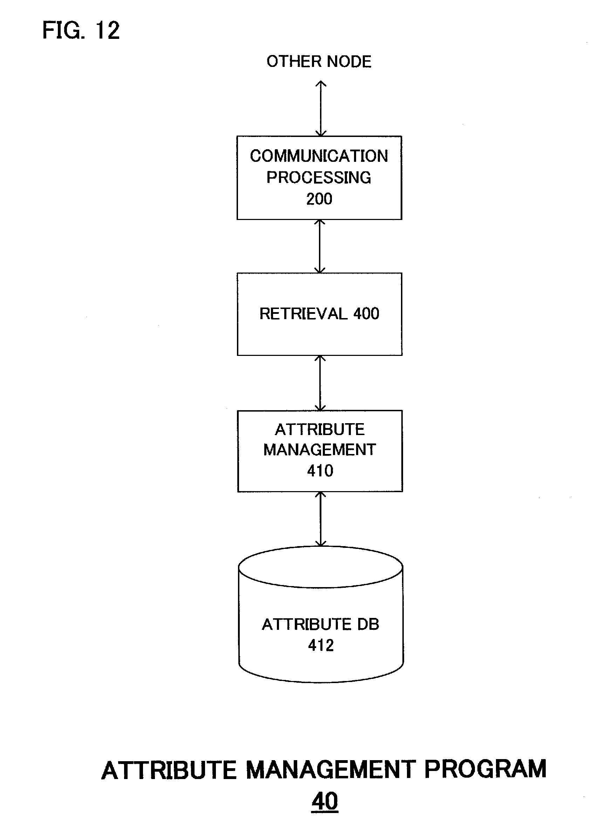

Fig. 12 is a view illustrating a structure of an attribute management program 40 operating on the attribute management unit 4 illustrated in Fig. 1.
As illustrated in Fig. 12, the attribute management program 40 is comprised of the communication processing section 200, a retrieval section 400, an attribute management section 410, and an attribute DB 412.
With the above-described components, the attribute management program 40 stores the attribute illustrated in Fig. 3 and the like and returns the attribute indicated by the management information used for the retrieval to the profile retrieval unit 2 according to the retrieval using the profile identifier (Fig. 3) by the profile retrieval unit 2.

In the attribute management program 40, the attribute management section 410 stores and manages the attribute value associated with the profile identifier in the attribute DB 412 as illustrated in Fig. 11 according to the registration of the profile identifier by the profile specification management unit 5 and the association between the profile identifier and the attribute.
The attribute management section 410 also provides the attribute values stored in the attribute DB 412 for the retrieval by the retrieval section 400.
The retrieval section 400 uses the profile identifier received from the profile retrieval unit 2 to retrieve the attribute stored in the attribute DB 412 and returns the result of the retrieval to the profile retrieval unit 2.

### [Overall operation of the network system 1J

Hereinafter, an overall operation of the network system 1 will be described.

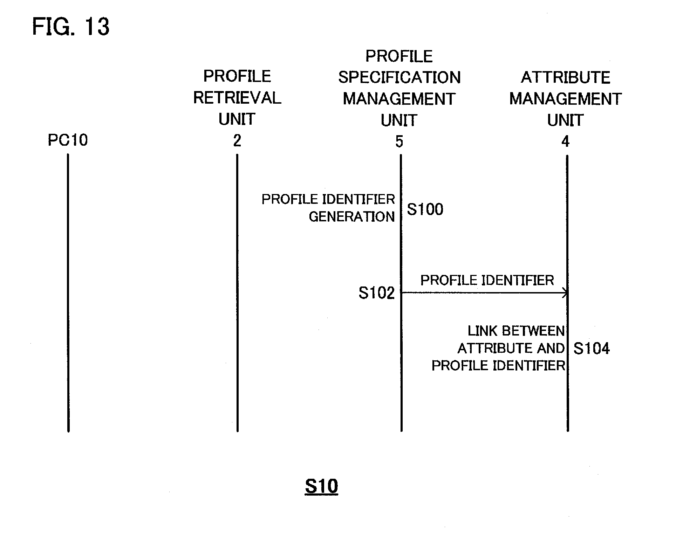

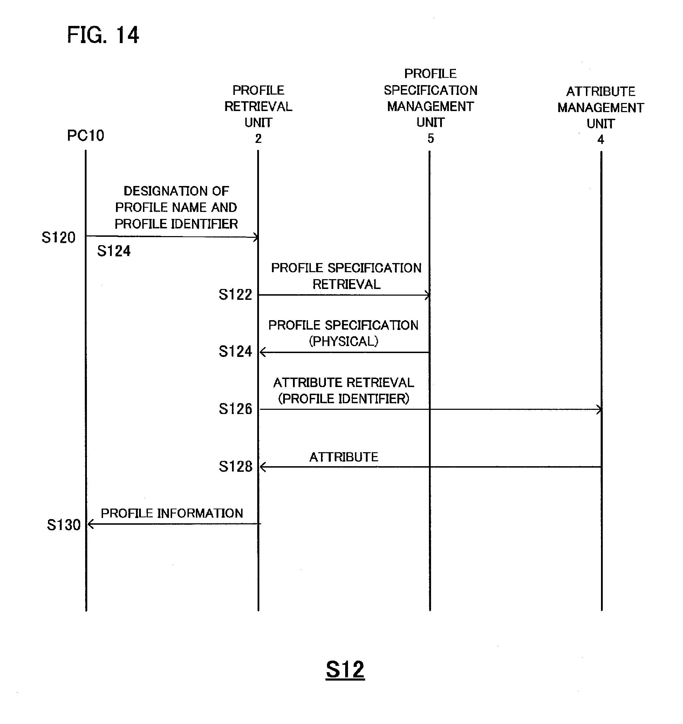

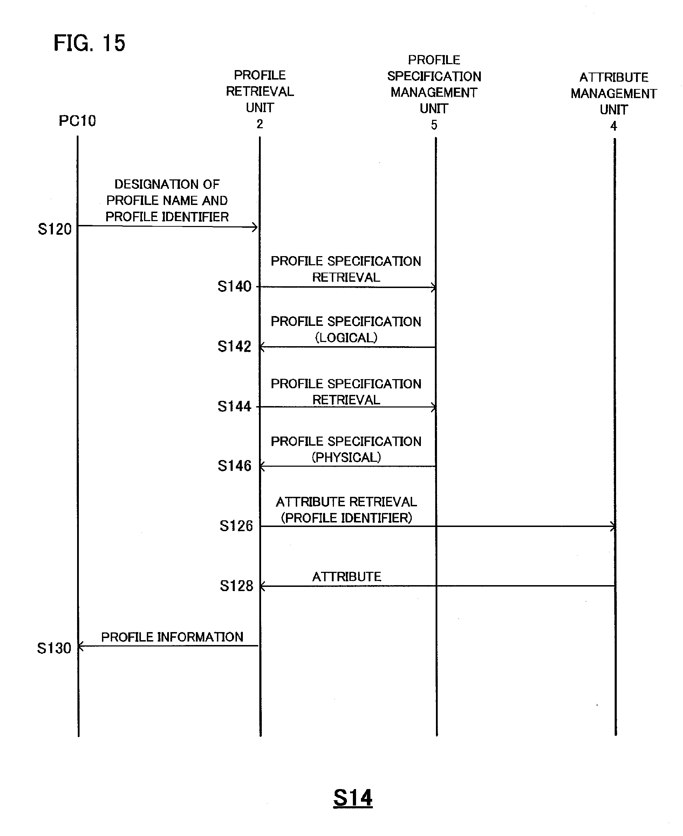

Figs. 13 to 15 are first to third communication sequence diagrams illustrating the overall operation (S10, S12, and S14) of the network system 1 illustrated in Fig. 1 or the like. Fig. 13 illustrates registration processing (S10), where the profile identifier from the profile specification management unit 5 is registered into the attribute management unit 4. Fig. 14 illustrates retrieval processing (S12), where the profile retrieval unit 2 obtains the physical profile from the profile specification management unit 5. Fig. 15 illustrates retrieval processing (S14), where the profile retrieval unit 2 initially obtains the logical profile from the profile specification management unit 5.

As illustrated in Fig. 13, in Step 100 (S100), the profile specification management unit 5 generates the profile identifier according to the identifier generation method contained in the physical profile specification (Fig. 4).
In Step 5102 (S102), the profile specification management unit 5 registers the profile identifier generated by the processing in S100 in the attribute management unit 4 to cause the attribute management unit 4 to associate the profile identifier and the attribute value with each other.
In Step 104 (S104), the attribute management unit 4 stores the profile identifier and the attribute value in association with each other as illustrated in Fig. 11 according to the profile specification management unit 5.

As illustrated in Fig. 14, in Step 120 (S120), the PC 10 issues a retrieval request with the designation of the profile name and the profile identifier (Fig. 3) to the profile retrieval unit 2 (Figs. 1 and 9).
In Steps 122 and 124 (S122 and S124), the profile retrieval unit 2 uses the profile name to perform the retrieval on the profile specification management unit 5 and obtains the physical profile specification.

In Steps 126 and 128 (S126 and S128), the profile retrieval unit 2 uses the profile identifier designated in the processing in S120 to perform the retrieval on the attribute management unit 4 indicated by the management information contained in the physical profile specification obtained by the processing in S104, and obtains the attribute (Fig. 12) corresponding to the profile identifier.
In Step 130 (S130), the profile retrieval unit 2 uses the attribute obtained by the processing in S126 to generate the profile information (Fig. 3), and returns the generated profile information to the PC 10.

As illustrated in Fig. 15, in Step 120 (S120), the PC 10 issues a retrieval request with the designation of the profile name and the profile identifier (Fig. 3) to the profile retrieval unit 2 (Figs. 1 and 9).
In Steps 140 and 142 (S140 and S142), the profile retrieval unit 2 uses the profile name to perform the retrieval from the profile specification management unit 5 and obtains the logical profile specification.
In Steps 144 and 146 (S144 and S146), the profile retrieval unit 2 uses the referredprofile name contained in the logical profile specification obtained by the processing in S140 and S142 to perform the retrieval from the profile specification management unit 5 and obtains the physical profile specification (Fig. 4).

In Steps 126 and 128 (S126 and S128), the profile retrieval unit 2 uses the profile identifier designated in the processing in S120 to perform the retrieval from the attribute management unit 4 indicated by the management information contained in the physical profile specification obtained by the processing in S104, and obtains the attribute (Fig. 11) corresponding to the profile identifier.
In Step 130 (S130), the profile retrieval unit 2 uses the attribute obtained by the processing in S126 to generate the profile information (Fig. 3), and returns the generated profile information to the PC 10.
As described above, when the profile retrieval unit 2 obtains the logical profile specifications from the profile specification management unit 5, the referred profile names contained in the obtained logical profile specifications are traced to finally obtain the physical profile specification. As a result, the target attribute can be obtained.
The profile retrieval unit 2 performs the processing in S144 and S146 each time the logical profile is obtained by the retrieval from the profile specification management unit 5. The profile retrieval unit 2 repeats the retrieval until the physical profile specification alone is obtained as a result of the retrieval.

### Industrial Applicability

The present invention can be used as an information retrieval unit for combining information obtained by retrieval to generate new information or the like.

### Description of Reference Numerals

- 1 ...: network system
- 100 ...: main body
- 102 ...: CPU
- 104 ...: memory
- 106 ...: I/O device
- 110 ...: communication device
- 112 ...: recording device
- 114 ...: recording medium
- 14 ...: network
- 2 ...: profile retrieval unit
- 20 ...: profile retrieval program
- 200 ...: communication processing section
- 202 ...: user interface section (UI section)
- 210 ...: profile designation receiving section
- 212 ...: profile identifier retrieval section
- 214 ...: profile identifier DB
- 220 ...: profile specification retrieval section
- 222 ...: physical profile specification acquisition section
- 224 ...: attribute retrieval section
- 226 ...: attribute management section
- 228 ...: attribute DB
- 230 ...: profile information generation section
- 232 ...: profile identifier generation section
- 4 ...: attribute management unit
- 40 ...: attribute management program
- 400 ...: retrieval section
- 410 ...: attribute management section
- 412 ...: attribute DB
- 5 ...: profile specification management unit
- 50 ...: profile specification management program
- 500 ...: retrieval section
- 510 ...: logical profile specification management section
- 512 ...: logical profile specification DB
- 514 ...: profile identifier generation section
- 516 ...: profile identifier registration section
- 520 ...: physical profile specification management section
- 522 ...: physical profile specification DB

## Claims

1. An information retrieval system for retrieving and managing second information, the second information containing first information identified by a first identifier and being identified by a second identifier, the information retrieval system comprising first to third nodes for communicating information with each other, wherein:
the first node stores the first information associated with the second identifier;
the second node stores third information;
the third information contains information for associating the first information stored in the first node and the second information with each other based on a third identifier; and
the third node includes:
information retrieval means for, in response to a designation of the third identifier and the second identifier, retrieving the second information corresponding to the designated third identifier from the second node; and
information generation means for generating a set of pieces of the first information, each corresponding to the second identifier designated by the first node, as the second information based on the second information obtained as a result of the retrieval.

2. The information retrieval system according to Claim 1, wherein:
the third information stored in the second node stores fourth information and fifth information or any of the fourth information and the fifth information;
the fourth information associates the third identifier, the first identifier, and sixth information indicating the first node storing the first information indicated by the first identifier with each other; and
the fifth information associates the third identifier, a further third identifier corresponding to the third identifier, the first identifier, and a further third identifier corresponding to the third identifier with each other.

3. The information retrieval system according to Claim 2, wherein:
the information retrieval means of the third node includes: first retrieval means for, in response to a designation of the third identifier and the second identifier, performing first retrieval to obtain all pieces of the fourth information and the fifth information, each containing the designated fourth identifier, or any of the fourth information and the fifth information from the second node; second retrieval means for performing second retrieval, the second retrieval allowing the third information and the fifth information, each containing the third identifier contained in the fifth information obtained by any of the first retrieval and the second retrieval, or any of the third information and fifth information to be obtained, the second retrieval being repeated until the third information alone is obtained by the second retrieval; and third retrieval means for performing third retrieval using the designated second identifier on the first node indicated by sixth information contained in the fourth information obtained by the first retrieval and the second retrieval or any of the first retrieval and the second retrieval; and
the information generation means generates a set of pieces of the first information, each being obtained by the third retrieval and associated with the second identifier, as the second information.

4. The information retrieval system according to any one of Claims 1 to 3, wherein at least arbitrary two of the first to third nodes are integrally configured.

5. The information retrieval system according to Claim 2, wherein:
the fourth information further contains identifier generation method information indicating a method of generating the second identifier; and
the second node further includes: identifier generation means for generating the second identifier based on the identifier generation method information contained in the fourth information; and registration means for performing a registration for associating the generated second identifier and the first information corresponding to the second identifier with each other in the first node.

6. The information retrieval system according to Claim 2 or 5, wherein:
the fifth information further contains access method definition information for defining an access method to the fourth information and the fifth information or any of the fourth information and the fifth information; and
the first retrieval means and the second retrieval means perform retrieval according to the access method definition information contained in the fifth information to obtain the fourth information and the fifth information or any of the fourth information and the fifth information.

7. An information retrieval unit for generating second information, the second information containing first information identified by a first identifier and being identified by a second identifier, wherein:
the first information is associated with the second identifier to be stored at each location;
third information is stored;
the third information contains information for associating the first information stored in the first node and the second information with each other based on third identifier;
the information retrieval unit includes: information retrieval means for, in response to a designation of the third identifier and the second identifier, retrieving the second information corresponding to the designated third identifier from the second node; and information generation means for generating a set of pieces of the first information, each corresponding to the second identifier designated by the first node, as the second information based on the second information obtained as a result of the retrieval.

8. The information retrieval unit according to Claim 7, wherein:
the stored third information stores fourth information and fifth information or any of the fourth information and the fifth information;
the fourth information associates the third identifier, the first identifier, and sixth information indicating the first node for storing the first information indicated by the first identifier with each other; and
the fifth information associates the third identifier, a further third identifier corresponding to the third identifier, the first identifier, and a further identifier corresponding to the third identifier with each other.

9. The information retrieval unit according to Claim 8, wherein:
the information retrieval means includes: first retrieval means for, in response to a designation of the third identifier and the second identifier, performing first retrieval to obtain all pieces of the fourth information and the fifth information, each containing the designated third identifier, or any of the fourth information and the fifth information from the second node; second retrieval means for performing second retrieval, the second retrieval allowing the fourth information and the fifth information, each containing the third identifier contained in the fifth information obtained by any of the first retrieval and the second retrieval, or any of the fourth information and fifth information to be obtained, the second retrieval being repeated until the third information alone is obtained by the second retrieval; and third retrieval means for performing third retrieval using the designated second identifier on the first node indicated by sixth information contained in the fourth information obtained by the first retrieval and the second retrieval or any of the first retrieval and the second retrieval; and
the information generation means generates a set of pieces of the first information, each being obtained by the third retrieval and associated with the second identifier, as the second information.

10. The information retrieval unit according to Claim 9, wherein:
the fifth information further contains access method definition information for defining an access method to the fourth information and the fifth information or any of the fourth information and the fifth information; and
the first retrieval means and the second retrieval means perform retrieval according to the access method definition information contained in the fifth information to obtain the fourth information and the fifth information or any of the fourth information and the fifth information.

11. An information retrieval method for generating second information, the second information containing first information identified by a first identifier and being identified by a second identifier, the first information being associated with the second identifier to be stored at each location, third information being stored, the third information containing information for associating the first information stored in the first node and the second information with each other based on the third identifier,
the information retrieval method comprising:
an information retrieval step of, in response to a designation of the third identifier and the second identifier, retrieving the second information corresponding to the designated third identifier from the second node; and
an information generation step of generating a set of pieces of the first information, each corresponding to the second identifier designated by the first node, as the second information based on a second information obtained as a result of the retrieval.

12. An information retrieval program for generating second information, the second information containing first information identified by a first identifier and being identified by a second identifier, the first information being associated with the second identifier to be stored at each location, third information being stored, the third information containing information for associating the first information stored in a first node and the second information with each other based on a third identifier,
the information retrieval program causing a computer to execute:
an information retrieval step of, in response to a designation of the third identifier and the second identifier, retrieving the second information corresponding to the designated third identifier from a second node; and
an information generation step of generating a set of pieces of the first information, each corresponding to the second identifier designated by the first node, as the second information based on the second information obtained as a result of the retrieval.
